# EUROPEAN PATENT SPECIFICATION

(11) **EP 4 261 087 B1**
(45) Date of publication and mention of the grant of the patent: **14.05.2025**
(21) Application number: 23163885.9
(22) Date of filing: 23.03.2023
(51) Int. Cl.: B60S 3/04

(54) **WASHING MACHINE FOR VEHICLES HAVING PROFILES WITH PROTRUDING PARTS AND WASHING METHOD OF THE SAID VEHICLES**
WASCHMASCHINE FÜR FAHRZEUGE MIT PROFILEN MIT VORSTEHENDEN TEILEN UND WASCHVERFAHREN FÜR DIESE FAHRZEUGE
MACHINE A LAVER POUR VEHICULES PRESENTANT DES PROFILS AVEC DES PARTIES SAILLANTES ET PROCEDE DE LAVAGE DESDITS VEHICULES

(30) Priority: 13.04.2022 IT 202200007301
(43) Date of publication of application: 18.10.2023
(73) Proprietor: Aquarama S.r.l., 12060 Novello (CN) (IT)
(72) Inventor: ABBÀ, Adriano Mario, 12010 VIGNOLO (CN) (IT); MOLINARI, Roberto, 14050 CESSOLE (AT) (IT)
(74) Representative: Karaghiosoff, Giorgio Alessandro

(56) References cited:
- EP-A1- 0 507 757
- DE-A1- 19 512 302
- FR-A1- 2 653 399
- US-A- 4 981 523
- US-A1- 2004 238 016
- US-A1- 2022 048 478

## Description

The present invention relates to a washing machine for vehicles, in particular cars, comprising at least one portal on which at least one support group of at least one dispensing nozzle of at least one high-pressure washing fluid is mounted,
a hydraulic circuit for feeding said fluid at a predetermined pressure being provided and
said portal and/or said support group of said at least one nozzle being movable with respect to the vehicle along a path of said non-interference group with the shape of said vehicle and/or accessories associated with the same,
said at least one nozzle being supported on the said support group in a position such that the propagation axis of the jet delivered by said nozzle is oriented against a facing surface of the vehicle.

Devices of this type are known in the state of the art and have different configurations of the nozzles as well as of their distribution along the support group.

The support group can also have various configurations which provide for example, in one case, a vertical support structure which can be moved along the sides and/or the front side and/or the rear side of the vehicle and on which at least one movable nozzle is mounted vertically along said vertical structure or on which are mounted a plurality of nozzles aligned along the vertical extension of said structure and which can be activated all together or in the number necessary to cover the entire height of the shape of the vehicle.

Alternatively or in combination, the support structure of the nozzle or nozzles is constituted by a horizontal transversal bar which is guided vertically movable for a predetermined stroke which goes from a position of minimum height from the ground to a position of maximum height and which transversal bar is further translatable relative to the vehicle in the direction of the longitudinal axis of the same, i.e. the front-rear axis of the vehicle.

Also in this case, according to an alternative, the transversal bar can house a plurality of nozzles, placed side by side along the longitudinal axis of said bar and each of which is intended to treat a predetermined longitudinal band of the vehicle of a plurality of longitudinal bands which cover the whole width of the vehicle or according to a further possible alternative the bar has at least one nozzle which is translatable or oscillating, or rotates along it so as to treat the whole width of the vehicle.

In all of the aforementioned embodiments it is also known, that the said at least one nozzle or the said plurality of nozzles and/or the said support group can oscillate for at least a certain angle of variation of the direction of the propagation axis of the jet of fluid with respect to the surface of the vehicle, generating an alternative displacement of the point of incidence of the jet on the surface of said vehicle.

The treatment of the entire surface of the vehicle is also determined according to the alternative configurations described above or other configurations, providing for a predetermined opening of the dispensed jet, preferably symmetrically to a central axis of propagation of the jet, here indicated simply as the axis of propagation and which aperture has predetermined dimensions according to two mutually perpendicular axes which subtend a plane perpendicular to said propagation axis.

The movement of the support group and/or of the nozzle(s) relative to the vehicle takes place thanks to sensors for detecting the shape of the vehicle relative to the side profile, i.e. the projection of the profile of the vehicle on a vertical plane parallel to the front-rear axis of the vehicle and/or when required also of the shape of the front and/or rear profile of the vehicle, i.e. the projection of the vehicle profile on a vertical plane transverse to the front-rear axis of the vehicle.

The detection of the shape, or of the shape of the vehicle profile, in particular of the lateral one, can take place by means of different types of sensors, such as for example by means of a combination of proximity sensors mounted on the support groups of the nozzle (s), or thanks to vehicle shape scanning elements consisting of a set of proximity or optical sensors arranged vertically aligned with horizontal beams between them so as to cover a predermined vertical band which goes from ground level to a predermined height and thanks to which it is possible to detect the shape of the vehicle by moving said group of sensors along the corresponding side of the vehicle.

Current resolutions are of the order of a few centimeters and are sufficient to detect the presence of protruding parts according to the definition of the present invention as will be detailed hereinafter.

The relative displacement between the vehicle and the nozzle (s) support group takes place thanks to a control unit of relative displacement actuators which move the vehicle and/or preferably the nozzle (s) support group in the forward-rear direction of the vehicle and in the vertical direction, so that the maximum overall dimensions of the support group have a non-interfering distance from the vehicle and in any case a predermined distance of the nozzles from the vehicle so as to optimize the efficiency of the given treatment of the fluid at pressure.

At present, many motor vehicles have shapes with protruding elements which form undercuts, i.e. elements which overlap in part and at a certain vertical distance with other parts of the vehicle. These conditions arise, for example, in the presence of spoilers or when a box is mounted on the roof of the vehicle thanks to support bars which therefore overlaps at least part of the roof and/or also at least part of the front and/or rear windscreen by a certain vertical distance.

In many cases, between the lower side of said protruding elements such as spoilers or the like and the part of the vehicle body and/or the windscreen or rear window band on which said protruding elements overlap, the corner area enclosed by them has an angular amplitude corresponding to an acute angle, while in vehicles, for example, with a so-called truncated tail or with a substantially vertical rear side, said angle is at most of the order of about 90°.

On the other hand, when there is a box mounted on the roof of the vehicle in addition to the corner area present in the parts of the box protruding beyond the front and rear sides of the roof, in the roof area the bottom side of the box is parallel to the roof itself and the distance is a few centimeters or approximately ten centimeters.

In the aforementioned conditions of protruding "roof" parts such as spoilers or the like and/or in the presence of boxes, known systems do not guarantee cleaning of the underside of said protruding part, or of the spoiler and/or box and/or also of the wall band or rear window or windscreen of the vehicle to which said protruding part overlaps at a certain distance.

Some known systems provide for the vertical axis of rotation of the vertical brushes to be inclined. However, when the rear profile of the vehicle has an inclination with respect to the vertical direction, even by correspondingly inclining the brushes it is not possible to reach well said areas which therefore remain treated in an insufficient manner. It should also be considered that the vertical brush rotation axis can be tilted only to a certain maximum angle.

Plants according to various constructions known to the state of the art are described in documents DE19512302, EP0507757 and US US2022/0048478.

Document DE19512302 discloses a system in which the movement of an application bar of treatment jets for cleaning vehicle bodies is controlled relative to the shape of the vehicle thanks to sensors which move together with the bar and precede it in the direction of movement of the said bar. The data is used to determine the slope of the body shape and the nozzles are oriented accordingly. Additionally, the nozzles are swung to operate on undercut surfaces.

The positioning of the nozzles and therefore the direction of the axis of the washing jets relative to the surfaces delimited by the undercut area, is not specifically defined, but simply the nozzles are operated in an oscillating manner around a horizontal axis so as to reach the undercut area with an undefined and generic inclination.

This washing mode does not give satisfactory results in terms of cleaning the undercut area. Furthermore, the known plant does not provide a stop station for the nozzles whose position relative to the undercut area is precisely defined, nor does it provide an optimized orientation of the nozzles for cleaning the surfaces which form the undercut recess.

The invention therefore has the object of perfecting a vehicle washing machine ensuring that, thanks to relatively simple and easily implemented expedients, it is also possible to effectively treat areas of vehicles which are currently either not treated at all or this treatment takes place in an unsatisfactory manner and/or incomplete.

The invention solves the problem posed thanks to a method for washing vehicles in combination with a washing machine, in particular cars or the like, comprising the combination of characteristics of the independent claim 1.

The concept on which the invention is therefore based is that of identifying the position of the rear spoiler and positioning the roof high-pressure bar in such a way as to be able to spray horizontally or slightly upwards under the spoiler.

According to a further feature, in the vertically and/or horizontally aligned position of the nozzle (s) against the undercut area and/or against the protruding element and/or immediately below it, the device for supporting said at least one nozzle (s) and/or said at least one nozzle or said nozzles are swung by a predetermined angular amplitude around said orientation position of the fluid jet (s) of the nozzle (s) against the area delimiting said undercut, between the side of said protruding element is the wall band of the vehicle on which said protruding element overlaps, at least around an axis of oscillation perpendicular to said orientation direction of the fluid jet (s).

In an embodiment intended for the treatment of undercut areas delimited by a protruding element with a substantially horizontal orientation such as a spoiler or a box mounted on the roof of the vehicle, or the like, the positioning of the portal and/or of the support group of said at least one nozzle and/or the orientation of said at least one nozzle determined by the control unit are such that the axis of propagation of the jet (s) is substantially contained in the horizontal plane coinciding with said protruding element or with the delimited undercut area from the same upwards, while the oscillation of the nozzle (s) takes place in the vertical plane and for an angular amplitude which provides for an inclination of said propagation axis alternately upwards and downwards with respect to the horizontal orientation.

According to one embodiment, the position of the nozzle (s) and their orientation for the treatment of the undercut areas determined by protruding elements of the vehicle profile is maintained for a predetermined period of time and at the end of which, the support group of the nozzle (s) and/or the portal move them relative to the vehicle for the treatment of further areas of the same.

From the above, it is evident that the system according to the present invention comprises similarly in the state of the art a scanning unit of the shape of the side profile of the vehicle, i.e. at least of the projection on the front-rear vertical plane and optionally also of the shape of the front profile or rear of the same, i.e. of the projection on the transversal vertical plane, which scanning unit supplies the data relating to the aforementioned profile or profiles to a processing unit which directly or indirectly controls the relative displacement between the portal and the vehicle, i.e. between the portal and/or support group and/or said at least one nozzle or said nozzles and the vehicle in such a way that the nozzles and said support group as well as the portal do not interfere with the profile of the vehicle, always positioning themselves at a predetermined distance from it and in in such a way that the nozzle or nozzles are oriented with the axis of propagation of the jet (s) in the direction of the area to be treated of the vehicle and at a predetermined angle with respect to the surface of said area to be treated facing towards the nozzle (s). Therefore, the vertical position of the nozzle (s) and their orientation varies according to the shape of the vehicle, while when the nozzle (s) reach a position substantially coinciding with a protruding element of the vehicle which forms an undercut area, the nozzles are oriented with the axis of propagation of the jet(s) against said undercut area and/or against the protruding element and the advancement in the front-rear direction of the vehicle and the movement in the vertical direction of the nozzle(s) is stopped for a predetermined period of time, possibly also actuating a brushing oscillation of the jet for a certain amplitude with respect to an intermediate orientation.

According to an embodiment, the period of time of permanence of the nozzle (s) in the position and with the treatment orientation of the protruding element and of the undercut area defined by this can be determined empirically, i.e. experimentally when setting up factory of the plant since this period of time is set in a fixed way and/or also possibly manually modifiable in the processing and/or control unit of the plant itself.

As far as the aforesaid analysis unit is concerned, this can be a processing unit in which a program is loaded which codifies the instructions to make this unit able to identify the said areas protruding from the data supplied by the scanning unit and to make this unit able to generate the command signals of motorized movement groups of the portal and/or of the support group of the nozzle (s) and/or of the nozzle (s).

In this case, the analysis unit directly controls the movements of the portal and/or of the support group and/or of the nozzle(s).

It is possible to associate a driver unit to the analysis unit which generates the command signals of the motorized groups for moving the portal and/or the support group and/or the nozzle (s), which driver unit receives signals for generating of said command signals from the analysis unit. In this case, the control takes place indirectly by the analysis unit.

According to the invention, the determination of the position of the undercut area takes place thanks to a method which provides for the identification of a vertex of directional change of the line which defines the scanned profile of the vehicle and/or a jump in position of said line, in combination with a signal entered by a user relating to the indication of the presence of a protruding element of the profile and a relative undercut, said undercut area being defined on the basis of an average distance value with respect to said vertex or to said jump in position of said line of the scanned profile.

This is based on the fact that the position of protruding elements permanently integrated into the exterior shape of a vehicle or consisting of parts such as accessories or the like fixed to the vehicle is generally contained within a range of positions.

Since the position of the spoiler is not the same on all means, in order to remedy inaccurate positioning and therefore such as to cause an inefficiency of the treatment, the aforementioned oscillation of the nozzles called swinging is envisaged and which causes the brushing action or of translation of the incidence band of the or jets along the area of the protruding element and/or of the relative undercut area for a certain angular extent. This therefore entails that the jet of high-pressure treatment fluid surely falls into the correct treatment position of the protruding element and of the relative undercut area.

Advantageously according to a feature which can be provided in combination with one or more any of the previous features, the portal has a high pressure washing unit in the form of a horizontal bar which moves to follow the profile of the vehicle and which bar carries orientable nozzles for generate adjustable jets of at least 180°-200°.

The side and/or front and/or rear vehicle profile scanning unit can be manufactured according to one of the embodiments of the following list:
a. Vehicle scanning photocell barrier
b. Diffuse with three photocells mounted on a roof drying bar and/or on a high pressure fluid nozzle support bar and/or on any movable element to follow the profile
c. Ultrasonic sensors
d. Laser sensors
e. Radar sensors

and/or combinations of these,
each of said scanning units being provided in combination with a unit for measuring the longitudinal position of the portal and/or of the support group and/or of the nozzle (s) along the front-rear extension of the vehicle.

According to yet another characteristic, the determination of the position of the protruding element, for example of the spoiler or of a box fixed to the roof, such as a skybox or the like, can take place in the following way:
the height of the vehicle is detected.
during high-pressure washing, the bar that houses the nozzles follows the profile of the vehicle;
at the rear, when it reaches a defined height (vehicle height - altitude difference), the jets are substantially oriented with the propagation axis of the jet in a horizontal direction or at a predermined angle. From this position the jets impact on the affected undercut area;
a swinging of a few degrees allows the entire undercut area to be covered with certainty.

The washing operation, for example of the underside of the spoiler, can be carried out indifferently during the high pressure washing pass from the front to the rear of the vehicle and during the pass from the rear to the front of the vehicle.

According to yet another characteristic, the support group of the nozzle (s) for the high pressure fluid can be constituted by the bar for delivering the drying air to the roof of the vehicle, the nozzle (s) being integrated in the said drying bar.

Notwithstanding the executive examples illustrated will refer to the more frequent case relating to the presence of rear and/or front spoilers or wings and/or to the case of elements fixed to the roof of the vehicle such as boxes or the like, in which the orientation and extension of these elements or of the undercut area is mainly horizontal, it is possible to extend the concept also to lateral undercut elements, i.e. protruding from the sides of the vehicles and which form undercuts with a substantially vertical trend, obviously by modifying correspondingly the prevailing orientation of the protruding elements and without the need for any inventive activity as described above.

The invention also refers to a washing machine for carrying out the method of claim 1. The method provides for the treatment with one or more high pressure jets of the surfaces of the external body of a vehicle, thanks to the translation of the incidence bands of one or more jets of fluid along the external surface of the vehicle with a path such as to cover the entire external surface of the vehicle and in which this translation is followed by keeping the dispensing nozzles at a predetermined distance and with an orientation incident against the external surfaces of the vehicle and the wherein said method provides for detecting undercut area of the external profile of the vehicle and positioning the castings at the level of said undercut areas and with an orientation incident against said undercut areas, maintaining said position for a limited predermined period of time.

The method may comprise one or more of the variants relating to the treatment methods described above for the washing machine.

For example, as already indicated above, by means of a special user interface provided with inlet devices, the choice of including an aforesaid washing step of a protruding element and of the related undercut area can be included in all washing programs which contemplate high pressure, or this choice can be set or activated at the end user's choice as an additional component.

What has been described above for the washing step with a high pressure jet can also be provided with the same methods or in a similar way for the spraying of the chemical product with a pre-washing function for the high pressure.

The delivery of this chemical product could take place through the same nozzles as the high pressure washing fluid or by means of a separate and parallel circuit.

The nozzles for dispensing the pre-wash chemical product could be on the same support which carries the nozzles for the high-pressure washing fluid or on another support dedicated to the nozzles for dispensing the pre-wash chemical product.

Further features are the subject of the dependent claims.

Also in the case of the prewash, the plant can be set so that this mode is always provided or alternatively members are provided for selecting and activating said mode similarly to what is provided for the high pressure washing phase.

The characteristics of the invention and the advantages deriving from it will become clearer from the following description of some preferred embodiments illustrated by way of example in the attached figures in which:
Figure 1 schematically shows a side view of a high-pressure washing machine for a motor vehicle provided with a rear spoiler.
Figure 2 shows similarly to Figure 1 the combination system of a vehicle muonting a skybox.

Washing machine for vehicles, and in particular those for washing cars, are divided into two broad categories: tunnel systems, in which the vehicle moves forward to reach the washing and drying systems, and mobile portal systems, in which the vehicle is stationary on a track along which one or more portal structures move, sliding on tracks, on which the devices for spraying the washing liquids, the brushes and the vehicle drying.

In both types of plant, the washing operations can take place by means of a group of rotating brushes which come into contact with the various parts of the body during the relative motion between the portal and the vehicle and/or by means of high pressure jets a washing fluid and optionally a pre-washing fluid.

Furthermore, the systems known in the state of the art have various configurations and different solutions relating to the positioning and construction of the group of brushes, the devices for spraying the washing liquids and the drying devices, as well as the hydraulic and electrical systems designed to regulate the operation of the washing machine for vehicles.

Furthermore, washing machine are known and widespread which have a double portal, so as to differentiate the washing steps by allocating different functions to each portal, so as to speed up the washing.

It is specified that the executive variants illustrated in the attached figures are given for illustrative purposes only and to better clarify concepts and advantages of the plant object of the present invention, but are not to be understood as limiting the inventive concept of the present patent application, which is to realizing a washing machine, in particular cars, comprising measures suitable for allowing effective washing of the surfaces relating to protruding parts which form undercut areas, thanks to the positioning of washing nozzles which emit fluid at high pressure at the level of said undercut areas and the orientation of the nozzles against and within said undercut areas.

The portal 1 consists of two vertical uprights 11, connected to each other by means of a horizontal crosspiece 13 arranged at a certain height.

The vertical uprights of which only one indicated by 11 is visible and which mutually support at least one of the brushes belonging to the group of brushes.

In particular, in the illustrated figures the group of brushes consists of a horizontal brush 21, rotatably supported so as to rotate according to a horizontal axis of rotation with respect to the support surface of the vehicle, and by two vertical brushes 22 which are rotatably supported so as to be able to rotate according to a vertical rotation axis with respect to the support surface of the vehicle to be washed.

Furthermore, the horizontal crosspiece 13 is connected frontally to the uprights 11, so as to cantilever the two vertical brushes 22.

The vertical rotation axis B is supported at the top by the horizontal crosspiece 13, in particular the upper end of the vertical rotation axis B is connected to support means 131 of the same, so as to allow rotation of the vertical brushes 22.

Preferably, the horizontal axis of rotation A of the horizontal brush 21 is translatable in a vertical direction or upwards and/or downwards with respect to the support surface of the vehicle, translation means (not shown) being provided for placing in relative motion the horizontal brush 21 with respect to the vehicle to be washed, so that the horizontal brush 21 can exert a transversal washing action along the entire length, or over a large part of the length, of the vehicle.

Similarly, it is possible to provide that the support means 131 of the vertical brushes 22, in addition to allowing rotation about the axis B, also allow the translation of the vertical brushes according to a mutual approach/removal direction.

The vehicle washing machine which is the object of the present invention can also include the components and characteristics common to systems known in the state of the art.

For example, the vertical brushes 22 can be guided to slide both transversely and longitudinally with respect to the vehicle to be washed.

Furthermore, washing members 14 can be provided which operate by emitting high pressure jets of a washing fluid and possibly also drying devices, supported on the same portal 1

Finally, the portal 1 can rest on the ground and be guided slidingly on rails by means of translation as indicated by the arrow F.

In the illustrated embodiment, the washing devices using high pressure fluid comprise a transverse horizontal bar 14 which carries one or more nozzles 141 which have a jet opening in a horizontal direction and parallel to the longitudinal axis of said transversal bar, so that the set of nozzles covers the entire surface to be treated. Said nozzles can also be of the cone type, or of the rotating pin type (rotating nozzles or turbo nozzles). The nozzles can be positioned on the bottom in a fixed and static way or the nozzles can be positioned on the bar in an adjustable way with reference to the direction of the propagation axis of the jet both in the direction of the longitudinal axis of the transversal bar, i.e. from right to left of the same, both in the direction of the vertical plane, i.e. from top to bottom and vice versa.

The orientation of the propagation axis of the nozzle jet in the vertical plane, i.e. upwards and/or downwards, can also take place thanks to the fact that the entire transverse support bar can be rotated about the horizontal axis.

A profile detection unit, at least of the lateral one, i.e. of the projection of the vehicle profile on a longitudinal vertical plane, i.e. oriented in the front-rear direction of the vehicle indicated by 15, is brought by the portal 1 to an advanced position to a predetermined extent with respect to the brushes and treatment units such as the high pressure washing fluid delivery bar and/or the drying air delivery bar or other treatment units.

In the illustrated embodiment, said unit for detecting the shape of the vehicle profile consists of a linear array of sensors placed side by side in a vertical direction. The sensors can be of different types and for example they consist of distance sensors, for example acoustic and/or optical which detect the height of the vehicle profile from the ground at the point where the vertical linear array intersects the vehicle profile.

Motorized groups not shown in detail are associated with the portal, each of which performs various functions including vertical translation of the horizontal brush, rotation of the horizontal brush, movements relative to the portal of the vertical brush(es) and rotation of the vertical brush(es), the vertical movement of the support bar of the nozzle (s) for the delivery of jets of high pressure washing fluid, the rotation around the horizontal axis of said bar and/or of the nozzle (s), the vertical translation of the bar of delivery of the drying air, the translation of the portal relative to the vehicle and other operating units such as for example the wheel rim washing units indicated with 16.

The motorized groups are commanded by a control unit which is not shown in detail according to the shape of the detected profile of the vehicle, so that the operating units such as the brushes and/or the nozzles for dispensing the washing fluid at high pressure and/or the drying air delivery bar move vertically and horizontally along a path of non-interference with the vehicle which follows the profile of the vehicle, keeping said operating units at a distance such that they perform the intended function, i.e. at a distance such that the brush bristles act on the vehicle surface and/or such a distance that the high pressure fluid jets and/or drying air effectively act on the vehicle surface relative to their intended function for the same, without interference between the structure of the brushes and the bars which can lead to damage to the vehicle.

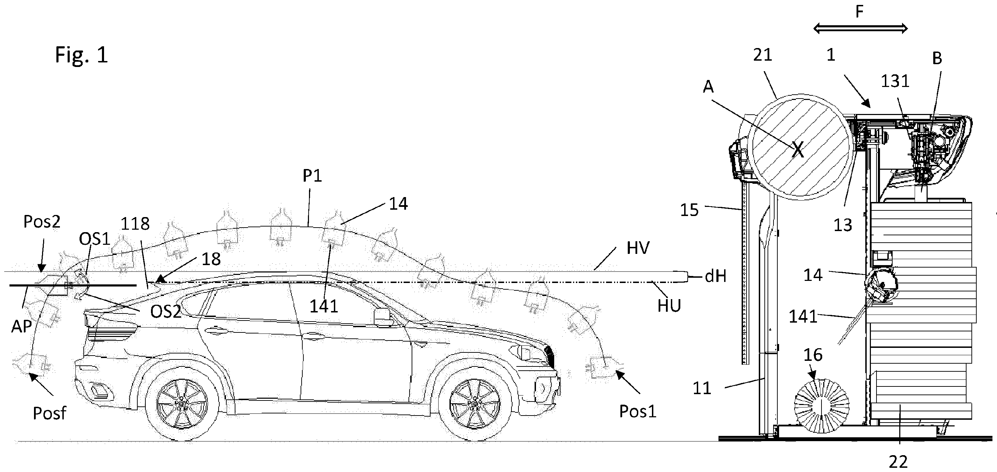

Figure 1 shows this path with the continuous line indicated by P1.

In relation to figure 1, as a wholly indicative way, along said path the various positions assumed by the transversal bar which carries the nozzles for dispensing the pressurized fluid jets are shown, in relation to the vertical position and orientation of the axis central propagation of the cone formed by the jet of high pressure washing fluid.

As is evident, the nozzles are oriented in a direction substantially perpendicular to the surface of the vehicle or to a tangential thereof at the point of incidence of the central axis of propagation of the jets with the surface of the vehicle.

Passing from an orientation parallel to the horizontal plane of substantially 0° in the initial position pos1 in which the jets are oriented substantially horizontally against the front of the vehicle to the contrary and opposite position with an angle substantially 180° in the final position posf in which the jets are oriented horizontally against the rear of the vehicle.

Pos2 indicates the position and orientation of the nozzle (s) and therefore of the bar in correspondence with the undercut area formed by a rear spoiler 18 of the vehicle.

As appears evident in said pos2, the support bar 14 of the nozzles for dispensing jets of high pressure fluid is held for a certain limited period of time and the same and/or the individual nozzles are oriented with the axis of propagation in the direction horizontal and against the undercut area 118 formed by the spoiler 18 and by the underlying band of the rear window and/or the roof of the vehicle. AP indicates the axis of propagation of the jet (s), while the two arrows OS1 and OS2 indicate the alternative upward and downward oscillation of the nozzles for a predetermined angle so as to generate a brushing effect of the area of undercut 118, i.e. of translation of the band of incidence of the jet (s) of fluid at high pressure against the surface of said undercut area.

The command for stopping of the bar 14 holding nozzles 141 at the level of the undercut area 118 and/or the spoiler 18 and orientation of the nozzles with the propagation axis of the jets substantially horizontal and/or the oscillation command of the nozzle (s) is generated by a control unit not shown in detail to which the vehicle profile sensors 15 are connected.

The profile detection signals with reference to the vertical and horizontal coordinates can be used to identify the presence and position of the spoiler 18 and therefore to position and orient the nozzles in said position for washing the spoiler and the undercut area.

According to a preferred embodiment, however, the vertical position of the spoiler 18 and therefore of the undercut area is defined thanks to the measurement of the overall height of the vehicle from which a predetermined measurement calculated on the basis of the average of the difference in height between the of the spoiler and the overall ground clearance of the vehicle. The horizontal line HV indicates the height of the vehicle. The difference dH relates to the preset parameter and is calculated as the average of the values measured for the various types of vehicles. The line HU defines the vertical position of the nozzles on the basis of the difference between the height of the vehicle HV and the said empirical value dH.

Since this dH value is an average value, in order to ensure effective treatment of the spoiler 18 and of the undercut area 118 defined by the same, the orientation of the AP propagation axis of the jets of pressure washing fluid as indicated by the arrows OS1 and OS2.

In combination or alternatively to the oscillatory movement of the nozzles, it is possible to provide an alternative translational movement between two extreme positions of a predetermined range of vertical positions.

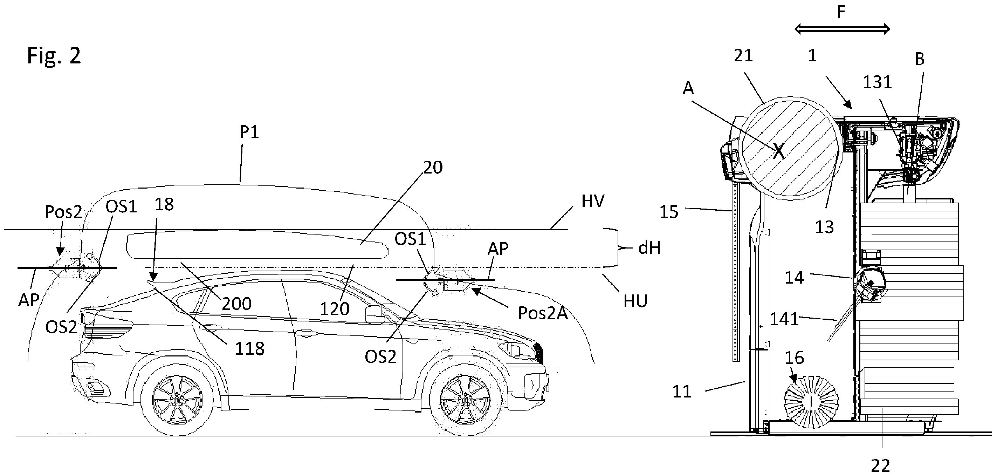

Figure 2 shows the extension of the system and method of washing the areas provided with protruding and undercut elements in the profiles of motor vehicles to a relatively frequent case, in which the vehicle is provided with a skybox mounted on the roof.

In this case figure 2 shows a system entirely similar to that of figure 1 and it is only the vehicle that has changed since it is provided with a skybox 20 mounted on the roof with respect to the embodiment of figure 1.

Similarly to the spoiler 18, the skybox 20 also determines undercut areas 120 and 200. In this case, an undercut area is also provided in the front part of the vehicle.

Furthermore, the bottom of the skybox 20 overlaps the roof of the vehicle, at least for a part thereof, therefore the jets of high pressure washing fluid are unable to effectively reach said areas of the roof.

As shown in figure 2, the nozzles 141 and therefore the nozzle holder bar 14 assume in this case two intermediate temporary stop positions indicated by Pos2A and Pos2B in which the nozzles 141 and/or the bar 14 are vertically aligned with the intermediate area between the underside of the skybox and the roof of the motor vehicle and in which during the period of temporary stop in said vertical position, the nozzles 141 and/or the bar 14 are oscillated around a horizontal axis for a certain angular amplitude in accordance with the arrows OS1 and OS2 with respect to the horizontal position of the AP propagation axis of the pressure washing fluid jets. This oscillation is chosen of such an amplitude that the incidence band of the jets sweeps with a predetermined inclination both the lower surface of the skybox and that of the roof of the vehicle, at least for a section in the longitudinal direction, reaching the entire lower surface of the skybox and/or the roof subjected to the jet thanks to the fact that said jet is delivered once in the direction of the front side and once in the direction of the rear side of the vehicle.

With reference to the angular amplitude of the oscillation of the nozzles 141 and/or of the bar 14, this can also be provided differentiated with different angular amplitudes upwards and downwards and/or with reference to the two positions Pos2 and Pos2B.

For example, in the illustrated embodiment, the vehicle is also provided with a rear spoiler, therefore the downward swing angle of the nozzles 141 or of the bar 14 when these are in the Pos2 position can be greater downwards, i.e. such to convey the high pressure jets also against the spoiler 18 and against the undercut area formed by the same.

According to a further possible feature, the system can be provided with nozzles for dispensing a pre-wash chemical fluid and/or other fluids such as wax, anti-halo and/or rinsing liquid, and it is possible to foresee that the characteristics relating to the delivery of the high-pressure washing liquid with reference to the treatment of protruding areas of the vehicle and the relative undercut areas or areas covered by said protruding areas is extended and applied also to the aforementioned pre-wash and/or anti-marking fluids and/or to wax and/ or flushing fluids.

In this case it is possible to use the same nozzles 141 and the corresponding bar 14 as the nozzles are connected alternatively to a supply source of said one or more fluids corresponding to the envisaged treatment step or for at least one or some of said further fluids it is possible to provide dedicated nozzles mounted on the same bar 14 or on a dedicated bar.

The invention is not limited to the particular embodiments described above by way of example, but the inventive teaching can also be provided in combination with other structures of the system and in particular of the portal.

For example, according to a possible embodiment, the portal can be made in the form of a double portal or a triple portal as, for example, described in document EP2243672A1, the detection system and/or the brushes and/or the drying bar and /or the nozzles for the high pressure fluid and/or for the support group of the same can in this case be associated with one or more of the various portals which form said double or triple portal. Therefore, in the present description and in the claims, the definition of portal is understood to include also double or triple portals and/or realizations of the plant according to a known configuration of the type called tunnel.

## Claims

1. Method for washing vehicles, in particular cars or the like, in combination with a washing machine comprising at least one portal on which at least one support group of at least one dispensing nozzle for at least one high-pressure washing fluid is mounted,
a hydraulic circuit for feeding said fluid at a predetermined pressure being provided and
said portal and/or said support group of
said at least one nozzle being moved with respect to the vehicle
along a path of said non-interference group with the shape of said vehicle and/or accessories associated with the same,
said at least one nozzle on the said
support group being supported
in a position such that the propagation
axis of the jet delivered by said nozzle is oriented against a facing surface of the vehicle and wherein the method provides for
identifying a protruding element of the profile in lateral and/or front and/or rear projection of the vehicle and of the relative undercut area delimited by the same and
temporary stopping of said support for said at least one nozzle in a vertically and/or horizontally position substantially aligned with said protruding element or with said undercut area and wherein the jet delivered by the nozzles is oriented incident against said undercut area and wherein
scanning with at least one scanning member the lateral and/or front and/or rear profile of the vehicle and analysying in an analysing unit said profile obtained from said scan,
said analysis unit being configured for the identification of the areas of said profile corresponding to protruding elements that form undercuts in the vehicle profile according to a lateral and/or front and/or rear projection of said vehicle,
and which analysis unit controls, directly or indirectly, the positioning of the portal and/or of the support group of said at least one nozzle and/or the orientation of said at least one nozzle in a position vertically aligned with the area of said protruding element and/or with the area directly underlying the same and wherein the jet (s) of said at least one nozzle are oriented against the area that delimits said undercut, between the side of said protruding element and the wall band of the vehicle to which the said protruding element overlaps, wherein the hod provides for
determining by the analysing unit the position of the undercut area thanks to a method which provides for the identification of a vertex of directional change of the line which defines the scanned profile of the vehicle and/or a jump in position of said line, in combination with a signal entered by a user relating to the indication of the presence of a protruding element of the profile and a relative undercut, said undercut area being defined on the basis of an average distance value with respect to said vertex or to said jump in position of said line of the scanned profile.

2. Method according to claim 1, wherein in the vertically and/or horizontally aligned position of the nozzle(s) against the undercut area and/or against the protruding element and/or immediately below the same, the support device of said at least one nozzle (s) and/or said at least one nozzle (s) are oscillated for a predetermined angular amplitude around said orientation position of the fluid jet (s) or nozzle (s) against the area delimiting said undercut, between the side of said protruding element and the wall band of the vehicle to which said protruding element overlaps, at least around an axis of oscillation perpendicular to said direction of orientation of the fluid jet (s).

3. Method according to one or more of the preceding claims intended for the treatment of undercut areas delimited by a protruding element with a substantially horizontal orientation such as a spoiler or a box mounted on the roof of the vehicle, or the like, wherein the positioning of the portal and/or of the assembly support of said at least one nozzle and/or the orientation of said at least one nozzle determined by the control unit are such that the propagation axis of the jet (s) is substantially contained in the horizontal plane coincident with said protruding element or with the undercut area delimited by the same upwards, while the nozzle (s) are oscillated in the vertical plane and for an angular amplitude which provides for an inclination of the propagation axis of the jets emitted by them, alternatively upwards and downwards with respect to horizontal orientation.

4. Method according to one or more of the preceding claims wherein the position of the nozzle (s) and their orientation for the treatment of the undercut areas determined by protruding elements of the vehicle profile is kept for a predetermined period of time and at the end of which, the support group of the nozzle (s) and/or the portal move the same relative to the vehicle for the treatment of further areas of the same.

5. Method according to claim 4, wherein the period of residence time of the nozzle (s) in the position and with the treatment orientation of the protruding element and of the undercut area defined by this can be determined empirically, i.e. experimentally during factory setting of the washing machine since this period of time is set permanently and/or even manually editable in the processing and/or control unit of the washing machine itself.

6. Method according to one or more of the preceding claims, wherein said analysis unit, is a processing unit wherein a program is loaded which encodes the instructions to make such unit capable of identifying said areas protruding from the data provided by the scanning unit and to make such unit capable of generating the control signals of motorized groups for moving the portal and/or of the support group of the nozzle (s) and/or of the nozzle (s) for which the analysis unit directly controls the displacements of the portal and/or of the support group and/or of the nozzle (s), or the analysis unit is associated with a driver unit which generates the control signals of the motorized groups for moving the portal and/or the support group and/or the nozzle (s), which driver unit receives signals for the generation of said control signals from the analysis unit, the command taking place indirectly by the analysis unit.

7. Method according to one or more of the preceding claims wherein the analysis unit is configured in such a way as to determine the position of the protruding element, for example of the spoiler or of a box fixed to the roof, such as a skybox or the like, with the following steps:
the height of the vehicle is detected;
during high-pressure washing, the bar that houses the nozzles follows the profile of the vehicle;
at the rear, when it reaches a defined height (vehicle height - altitude difference), the jets are substantially oriented with the propagation axis of the jet in a horizontal direction or at a predermined angle. From this position the jets impact on the affected undercut area;
a swinging of a few degrees or a vertical translation between two limits of the nozzles allows the entire undercut area to be covered with certainty.

8. Washing machine for carrying out the method according to one or more of the preceding claims wherein the said washing machine comprises
at least one portal on which at least one support group of at least one dispensing nozzle for at least one high-pressure washing fluid is mounted,
a hydraulic circuit for feeding said fluid at a predetermined pressure being provided and
said portal and/or said support group of said at least one nozzle being movable with respect to the vehicle along a path of said non-interference group with the shape of said vehicle and/or accessories associated with the same,
identification means of a protruding element of the profile in lateral and/or front and/or rear projection of the vehicle and of the relative undercut area delimited by the same and
a station for temporary stopping of said support for said at least one nozzle in a vertically and/or horizontally position substantially aligned with said protruding element or with said undercut area and wherein the jet delivered by the nozzles is oriented incident against said undercut area;
at least one scanning member of the lateral and/or front and/or rear profile of the vehicle is provided and is connected to an analysis unit of said profile obtained from said scan;
said analysis unit being configured for the identification of the areas of said profile corresponding to protruding elements that form undercuts in the vehicle profile according to a lateral and/or front and/or rear projection of said vehicle,
and which analysis unit controls, directly or indirectly, the positioning of the portal and/or of the support group of said at least one nozzle and/or the orientation of said at least one nozzle in a position vertically aligned with the area of said protruding element and/or with the area directly underlying the same and wherein the jet (s) of said at least one nozzle are oriented against the area that delimits said undercut, between the side of said protruding element and the wall band of the vehicle to which the said protruding element overlaps
wherein said analysis unit, is
a processing
unit wherein a program is loaded which encodes the instructions to make such unit capable of identifying said areas protruding from the data provided by the scanning unit and to make such unit capable of generating the control signals of motorized groups for moving the portal and/or of the support group of the nozzle (s) and/or of the nozzle (s) for which the analysis unit directly controls the displacements of the portal and/or of the support group and/or of the nozzle (s), or
the analysis unit is associated with a driver unit which generates the control signals of the motorized groups for moving the portal and/or the support group and/or the nozzle (s), which driver unit receives signals for the generation of said control signals from the analysis unit, the command taking place indirectly by the analysis unit,
and wherein the analysis unit is configured so as to determine the position of the undercut area thanks to a method which provides for the identification of a vertex of directional change of the line which defines the scanned profile of the vehicle and/or a jump in position of said line, in combination with a signal entered by a user relating to the indication of the presence of a protruding element of the profile and a relative undercut, said undercut area being defined on the basis of an average distance value with respect to said vertex or to said jump in position of said line of the scanned profile.

9. Washing machine according to claim 8, wherein the portal has a high-pressure washing unit in the form of a horizontal bar with movements to follow the profile of the vehicle and which bar carries orientable nozzles to generate orientable jets and/or which bar carries nozzle oriented according to a predetermined direction to generate oriented jets.

10. Washing machine according to claim 8 or 9, the lateral and/or front and/or rear vehicle profile scanning unit can be provided according to one of the embodiments of the following list:
a. Vehicle scanning photocell barrier
b. Diffuse with three photocells mounted on a roof drying bar and/or on a nozzle support bar for high pressure fluid or on other vertically movable element
c. Ultrasonic sensors
d. Laser sensors
e. Radar sensors
and/or combinations of these,
each of said scanning units being provided in combination with a unit for measuring the longitudinal position of the portal and/or the support group and/or of the nozzle (s) along the front-rear extension of the vehicle.

## Patentansprüche

1. Verfahren zum Waschen von Fahrzeugen, insbesondere Kraftfahrzeugen oder dergleichen, in Kombination mit einer Waschanlage, umfassend mindestens ein Portal, an dem mindestens eine Trägergruppe von mindestens einer Abgabedüse für mindestens ein Hochdruck-Waschfluid montiert ist,
wobei ein hydraulischer Kreislauf zum Zuführen des Fluids mit einem vorbestimmten Druck vorgesehen ist und
wobei das Portal und/oder die Trägergruppe der wenigstens einen Düse in Bezug auf das Fahrzeug entlang einer die Form des Fahrzeugs und/oder der zugeordneten Zubehörteile nicht störenden Bahn der Gruppe bewegt wird,
die mindestens eine Düse auf der Trägergruppe in einer derartigen Stellung gehalten wird, dass die Ausbreitungsachse des von der Düse abgegebenen Strahls gegen eine zugewandte Fläche des Fahrzeugs gerichtet ist, und wobei das Verfahren die Identifizierung eines in seitlicher und/oder vorderer und/oder hinterer Projektion vorstehenden Profilelements des Fahrzeugs und des von diesem begrenzten jeweiligen hinterschnittenen Bereichs vorsieht, und
das zeitweilige Anhalten des Trägers für die mindestens eine Düse in einer vertikalen und/oder horizontalen Lage, die im Wesentlichen mit dem vorstehenden Element oder mit dem hinterschnittenen Bereich fluchtend angeordnet ist, wobei der von den Düsen abgegebene Strahl gegen den hinterschnittenen Bereich einfallend gerichtet ist und wobei
Abtasten des seitlichen und/oder vorderen und/oder hinteren Fahrzeugprofils mit mindestens einem Abtastorgan und Analysieren des durch die Abtastung erhaltenen Profils in einer Analyseeinheit,
wobei die Analyseeinheit dazu eingerichtet ist, die Profilbereiche zu identifizieren, die vorspringenden Elementen entsprechen, welche Hinterschneidungen im Fahrzeugprofil gemäß einer seitlichen und/oder vorderen und/oder hinteren Projektion des Fahrzeugs bilden,
und welche Analyseeinheit unmittelbar oder mittelbar die Positionierung des Portals und/oder der Trägergruppe der mindestens einen Düse und/oder die Ausrichtung der mindestens einen Düse in einer Lage steuert, die vertikal mit dem Bereich des vorstehenden Elements und/oder mit dem unmittelbar darunter liegenden Bereich ausgerichtet ist und wobei der Strahl (die Strahlen) der mindestens einen Düse gegen den die Hinterschneidung begrenzenden Bereich zwischen der Seite des vorstehenden Elements und dem von dem vorstehenden Element überlappten Wandband des Fahrzeugs gerichtet ist (sind), wobei das Verfahren
die Bestimmung der Position des hinterschnittenen Bereichs durch die Analyseeinheit vorsieht, und zwar dank eines Verfahrens, das die Identifizierung eines Scheitelpunkts der Richtungsänderung der Linie, die das abgetastete Fahrzeugprofil und/oder einen Positionssprung dieser Linie definiert, in Kombination mit einem von einem Benutzer eingegebenen Signal, das sich auf das Vorhandensein eines hervorstehenden Elements des Profils und einer jeweiligen Hinterschneidung bezieht, vorsieht, wobei der hinterschnittene Bereich auf der Basis eines durchschnittlichen Abstandswertes in Bezug auf den Scheitelpunkt oder den Positionssprung der Linie des abgetasteten Profils definiert wird.

2. Verfahren nach Anspruch 1, wobei in der vertikal und/oder horizontal, gegen den hinterschnittenen Bereich und/oder gegen das vorstehende Element und/oder unmittelbar unterhalb desselben ausgerichteten Lage der Düse(n) die Trägervorrichtung der mindestens einen Düse(n) und/oder die mindestens eine Düse(n) mit einer vorbestimmten Winkelamplitude um die Orientierungsstellung des Fluidstrahls (der Fluidstrahlen) oder der Düse(n) gegen den den Hinterschnitt begrenzenden Bereich, zwischen der Seite des vorstehenden Elements und dem von dem vorstehenden Element überlappten Wandband des Fahrzeugs, zumindest um eine senkrecht zur Orientierungsrichtung des Fluidstrahls oder der Düse(n) liegende Schwingungsachse geschwenkt wird.

3. Verfahren nach einem oder mehreren der vorhergehenden Ansprüche, das für die Behandlung von durch ein vorstehendes Element mit einer im Wesentlichen horizontalen Ausrichtung, wie einem Spoiler oder einer auf dem Fahrzeugdach montierten Box oder dergleichen, begrenzten hinterschnittenen Bereichen bestimmt ist, wobei die Positionierung des Portals und/oder der Trägeranordnung der mindestens einen Düse und/oder die von der Steuereinheit bestimmte Ausrichtung der mindestens einen Düse derart sind, dass die Ausbreitungsachse des (der) Strahls (Strahlen) im Wesentlichen in der horizontalen Ebene enthalten ist, die mit dem vorstehenden Element oder mit dem von diesem nach oben begrenzten hinterschnittenen Bereich zusammenfällt, während die Düse(n) in der vertikalen Ebene und mit einer Winkelamplitude geschwenkt wird (werden), die eine abwechselnd nach oben und nach unten zur Horizontalausrichtung gerichtete Neigung der Ausbreitungsachse der von den Düsen abgegebenen Strahlen vorsieht.

4. Verfahren nach einem oder mehreren der vorhergehenden Ansprüche, wobei die Lage der Düse(n) und ihre Ausrichtung für die Behandlung der durch vorstehende Elemente des Fahrzeugprofils bestimmten hinterschnittenen Bereiche für eine vorgegebene Zeitspanne beibehalten wird und nach Ablauf dieser Zeitspanne die Trägergruppe der Düse(n) und/oder das Portal diese relativ zum Fahrzeug zur Behandlung weiterer Bereiche desselben bewegen.

5. Verfahren nach Anspruch 4, wobei die Verweildauer der Düse(n) in der Lage und mit der Behandlungsausrichtung des vorstehenden Elements und des dadurch definierten hinterschnittenen Bereichs empirisch, d.h. experimentell bei der Werkseinstellung der Waschanlage ermittelt werden kann, da diese Verweildauer in der Verarbeitungs- und/oder Steuereinheit der Waschanlage selbst fest eingestellt und/oder sogar manuell änderbar ist.

6. Verfahren nach einem oder mehreren der vorhergehenden Ansprüche, wobei die Analyseeinheit eine Verarbeitungseinheit ist, in die ein Programm geladen ist, das die Anweisungen kodiert, um eine solche Einheit zu befähigen, die vorstehenden Bereiche aus den von der Abtasteinheit gelieferten Daten zu identifizieren, und um eine solche Einheit zu befähigen, die Steuersignale der motorisierten Gruppen zum Bewegen des Portals und/oder der Trägergruppe der Düse(n) und/oder der Düse(n) zu erzeugen, so dass die Analyseeinheit die Bewegungen des Portals und/oder der Trägergruppe und/oder der Düse(n) direkt steuert, oder der Analyseeinheit ist eine Treibereinheit zugeordnet, die die Steuersignale der motorisierten Gruppen zum Bewegen des Portals und/oder der Trägergruppe und/oder der Düse(n) erzeugt, wobei die Treibereinheit Signale für die Erzeugung dieser Steuersignale von der Analyseeinheit empfängt und die Steuerung indirekt durch die Analyseeinheit erfolgt.

7. Verfahren nach einem oder mehreren der vorhergehenden Ansprüche, wobei die Analyseeinheit derart eingerichtet ist, dass sie die Lage des vorstehenden Elements, beispielsweise des Spoilers oder einer am Dach befestigten Box, wie einer Skibox oder dergleichen, bestimmt, mit den folgenden Schritten:
Die Höhe des Fahrzeugs wird erfasst;
Während der Hochdruckreinigung folgt der die Düsen aufnehmende Balken dem Profil des Fahrzeugs;
Am Heck, bei Erreichen einer bestimmten Höhe (Fahrzeughöhe - Höhenunterschied), sind die Düsen im Wesentlichen mit der Ausbreitungsachse des Strahls in horizontaler Richtung oder in einem vorher festgelegten Winkel ausgerichtet. Von dieser Position aus treffen die Strahlen auf den betroffenen hinterschnittenen Bereich;
Eine Schwenkung um wenige Grade oder eine vertikale Bewegung zwischen zwei Begrenzungen der Düsen ermöglicht es, den gesamten hinterschnittenen Bereich mit Sicherheit zu decken.

8. Waschanlage zur Durchführung des Verfahrens nach einem oder mehreren der vorhergehenden Ansprüche, wobei die Waschanlage umfasst
mindestens ein Portal, an dem mindestens eine Trägergruppe mindestens einer Dosierdüse für mindestens ein Hochdruck-Waschfluid montiert ist,
wobei ein hydraulischer Kreislauf zum Zuführen des Fluids mit einem vorbestimmten Druck vorgesehen ist und
das Portal und/oder die Trägergruppe der wenigstens einen Düse in Bezug auf das Fahrzeug entlang einer die Form des Fahrzeugs und/oder der zugeordneten Zubehörteile nicht störenden Bahn der Gruppe bewegt wird,
Identifizierungsmittel für ein vorstehendes Element des Profils in seitlicher und/oder vorderer und/oder hinterer Projektion des Fahrzeugs und des von diesem begrenzten jeweiligen hinterschnittenen Bereichs und
Identifizierungsmittel für ein vorstehendes Element des Profils in seitlicher und/oder vorderer und/oder hinterer Projektion des Fahrzeugs und des von diesem begrenzten jeweiligen hinterschnittenen Bereichs;
wobei mindestens ein Abtastorgan des seitlichen und/oder vorderen und/oder hinteren Profils des Fahrzeugs vorgesehen ist und mit einer Analyseeinheit des aus der Abtastung gewonnenen Profils verbunden ist;
wobei die Analyseeinheit dazu eingerichtet ist, die Profilbereiche zu identifizieren, die vorspringenden Elementen entsprechen, welche Hinterschneidungen im Fahrzeugprofil gemäß einer seitlichen und/oder vorderen und/oder hinteren Projektion des Fahrzeugs bilden,
und welche Analyseeinheit unmittelbar oder mittelbar die Positionierung des Portals und/oder der Trägergruppe der mindestens einen Düse und/oder die Ausrichtung der mindestens einen Düse in einer Lage steuert, die vertikal mit dem Bereich des vorstehenden Elements und/oder mit dem unmittelbar darunter liegenden Bereich ausgerichtet ist und wobei der Strahl (die Strahlen) der mindestens einen Düse gegen den die Hinterschneidung begrenzenden Bereich zwischen der Seite des vorstehenden Elements und dem von dem vorstehenden Element überlappten Wandband des Fahrzeugs gerichtet ist (sind),
wobei die Analyseeinheit eine Verarbeitungseinheit ist, in die ein Programm geladen ist, das die Anweisungen kodiert, um eine solche Einheit zu befähigen, die vorstehenden Bereiche aus den von der Abtasteinheit gelieferten Daten zu identifizieren, und um eine solche Einheit zu befähigen, die Steuersignale der motorisierten Gruppen zum Bewegen des Portals und/oder der Trägergruppe der Düse(n) und/oder der Düse(n) zu erzeugen, so dass die Analyseeinheit die Bewegungen des Portals und/oder der Trägergruppe und/oder der Düse(n) direkt steuert, oder der Analyseeinheit ist eine Treibereinheit zugeordnet, die die Steuersignale der motorisierten Gruppen zum Bewegen des Portals und/oder der Trägergruppe und/oder der Düse(n) erzeugt, wobei die Treibereinheit Signale für die Erzeugung dieser Steuersignale von der Analyseeinheit empfängt und die Steuerung indirekt durch die Analyseeinheit erfolgt,
und wobei die Analyseeinheit zur Bestimmung der Lage des hinterschnittenen Bereichs eingerichtet ist, und zwar dank eines Verfahrens, das die Identifizierung eines Scheitelpunkts der Richtungsänderung der Linie, die das abgetastete Fahrzeugprofil und/oder einen Positionssprung dieser Linie definiert, in Kombination mit einem von einem Benutzer eingegebenen Signal, das sich auf das Vorhandensein eines hervorstehenden Elements des Profils und einer jeweiligen Hinterschneidung bezieht, wobei der hinterschnittene Bereich auf der Basis eines durchschnittlichen Abstandswertes in Bezug auf den Scheitelpunkt oder den Positionssprung der Linie des abgetasteten Profils definiert ist.

9. Waschanlage gemäß Anspruch 8, wobei das Portal eine Hochdruckwascheinheit in Form eines horizontalen Balkens aufweist, der Bewegungen ausführt, um das Profil des Fahrzeugs zu verfolgen, und welcher Balken ausrichtbare Düsen zur Erzeugung von ausrichtbaren Strahlen trägt und/oder welcher Balken Düsen trägt, die zur Erzeugung von Strahlen in eine vorbestimmte Richtung ausgerichtet sind.

10. Waschanlage gemäß Anspruch 8 oder 9, wobei die Abtasteinheit für seitliche und/oder vordere und/oder hintere Fahrzeugprofile gemäß einer der Ausführungsformen der folgenden Liste vorgesehen sein kann:
a. Fahrzeug-Abtastlichtschranke
b. Abtasten mit drei Photozellen, die an einem Dach-Trocknungsbalken und/oder an einem Düsen-Trägerbalken für Hochdruckfluid oder an einem anderen vertikal beweglichen Element montiert sind
c. Ultraschallsensoren
d. Lasersensoren
e. Radarsensoren
und/oder Kombinationen derselben,
wobei jede dieser Abtasteinheiten in Kombination mit einer Einheit zur Messung der Längsposition des Portals und/oder der Trägergruppe und/oder der Düse(n) entlang der Vorwärts-Rückwärts-Erstreckung des Fahrzeugs vorgesehen ist.

## Revendications

1. Méthode de lavage de véhicules, notamment de voitures ou similaires, en combinaison avec une station de lavage comprenant au moins un portail sur lequel est monté au moins un ensemble de support d'au moins une buse de distribution d'au moins un fluide de lavage à haute pression,
étant fourni un circuit hydraulique pour fournir ledit fluide à une pression prédéfinie, et
ledit portail et/ou ledit ensemble de support de ladite au moins une buse se déplaçant par rapport au véhicule le long d'une trajectoire dudit ensemble de non-interférence avec la forme dudit véhicule et/ou desdits accessoires associés au même,
ladite au moins une buse sur ledit ensemble de support étant supportée dans une position telle que l'axe de propagation du jet délivré par ladite buse est orienté contre une surface en vue du véhicule et dans laquelle la méthode prévoit d'identifier un élément saillant du profil en projection latérale et/ou frontale et/ou arrière du véhicule et de la zone de contre-dépouille respective délimitée par le même et
d'arrêter temporairement ledit support pour ledit au moins une buse dans une position sensiblement alignée verticalement et/ou horizontalement avec ledit élément saillant ou avec ladite zone de contre-dépouille et dans laquelle le jet délivré par les buses est orienté incident contre ladite zone de contre-dépouille et dans laquelle
de balayer avec au moins un élément de balayage le profil latéral et/ou frontal et/ou arrière et d'analyser ledit profil obtenu à partir dudit balayage dans une unité d'analyse, ladite unité d'analyse étant configurée pour identifier les zones dudit profil correspondant aux éléments saillants formant des contre-dépouilles dans le profil du véhicule selon une projection latérale et/ou frontale et/ou arrière dudit véhicule,
et laquelle unité d'analyse contrôle, directement ou indirectement, le positionnement du portail et/ou de l'ensemble de support de ladite au moins une buse et/ou l'orientation de ladite au moins une buse dans une position alignée verticalement avec la zone dudit élément saillant et/ou avec la zone directement sous-jacente au même, et dans laquelle le(s) jet(s) de ladite au moins une buse est/sont orienté(s) contre la zone délimitant ladite contre-dépouille, entre le côté dudit élément saillant et la bande de paroi du véhicule chevauchée par ledit élément saillant, dans laquelle la méthode prévoit de déterminer, par l'unité d'analyse, la position de la zone de contre-dépouille grâce à une méthode qui prévoit d'identifier un sommet de changement de direction de la ligne définissant le profil balayé du véhicule et/ou un saut de position de ladite ligne, en combinaison avec un signal introduit par un utilisateur relatif à l'indication de la présence d'un élément saillant du profil et d'une contre-dépouille respective, ladite zone de contre-dépouille étant définie en fonction d'une valeur de distance moyenne par rapport audit sommet ou audit saut de position de ladite ligne du profil balayé.

2. Méthode selon la revendication 1, dans laquelle, dans la position alignée verticalement et/ou horizontalement de la buse, ou des buses, contre la zone de contre-dépouille et/ou contre l'élément saillant et/ou immédiatement en dessous de la même, le dispositif de support de ladite au moins une/plusieurs buse(s) et/ou ladite/lesdites au moins une buse(s) oscille/nt selon une amplitude angulaire prédéfinie autour de ladite position d'orientation du/des jet(s) de fluide ou de la/des buse(s) contre la zone délimitant ladite contre-dépouille, entre le côté dudit élément saillant et la bande de paroi du véhicule chevauchée par ledit élément saillant, au moins autour d'un axe d'oscillation perpendiculaire à ladite direction d'orientation du/des jet(s) de fluide.

3. Méthode selon l'une ou plusieurs des revendications précédentes, destinée pour le traitement des zones de contre-dépouille délimités par un élément saillant d'orientation sensiblement horizontale, tel qu'un spoiler ou un coffre monté sur le toit du véhicule, ou similaire, dans laquelle le positionnement du portail et/ou de l'ensemble de support de ladite au moins une buse et/ou l'orientation de ladite au moins une buse déterminées par l'unité de contrôle sont telles que l'axe de propagation du/des jet(s) est/sont sensiblement contenu(s) dans le plan horizontal coïncidant avec ledit élément saillant ou avec la zone de contre-dépouille délimitée par le même vers le haut, tandis que la/les buse(s) oscille(nt) dans le plan vertical et d'une amplitude angulaire prévoyant une inclinaison de l'axe de propagation des jets émis par la/les même(s), alternativement vers le haut et vers le bas par rapport à l'orientation horizontale.

4. Méthode selon l'une ou plusieurs des revendications précédentes, dans laquelle la position de la buse(s) et son orientation pour le traitement des zone de contre-dépouille déterminées par les éléments saillants du profil du véhicule sont maintenues pour un délai de temps prédéfini et, à la fin duquel, l'ensemble de support de la buse(s) et/ou le portail les déplacent par rapport au véhicule pour le traitement d'autres zones du même.

5. Méthode selon la revendication 4, dans laquelle la durée de permanence de la/des buse(s) dans la position et avec l'orientation de traitement de l'élément saillant et de la zone de contre-dépouille définie par le même peut être déterminé de manière empirique, c.à.d. de manière expérimentale lors du réglage en usine de la station de lavage puisque ce durée est réglé de manière permanente et/ou peut même être modifié dans l'unité de traitement et/ou de commande de la station de lavage elle-même.

6. Méthode selon l'une ou plusieurs des revendications précédentes, dans laquelle ladite unité d'analyse est une unité de traitement dans laquelle un programme est chargé qui codifie les instructions pour rendre cette unité capable d'identifier lesdites zones saillantes à partir des données fournies par l'unité de balayage et pour rendre cette unité capable de générer les signaux de commande des ensembles motorisés pour déplacer le portail et/ou l'ensemble de support de la/des buse(s) et/ou de la/des buse(s) pour lesquels l'unité d'analyse contrôle directement les déplacements du portail et/ou de l'ensemble de support et/ou de la/des buse(s), ou
l'unité d'analyse est associée à une unité de pilotage qui génère les signaux de commande des ensembles motorisés pour déplacer le portail et/ou l'ensemble de support et/ou la/les buse(s), laquelle unité de pilotage reçoit des signaux pour générer lesdits signaux de commande de l'unité d'analyse, la commande s'effectuant indirectement par l'unité d'analyse.

7. Méthode selon l'une quelconque ou plusieurs des revendications précédentes, dans laquelle l'unité d'analyse est configurée de sorte à déterminer la position de l'élément saillant, par exemple du spoiler ou d'un coffre fixé au toit, tel qu'un skybox ou similaire, selon les étapes suivantes:
la hauteur du véhicule est détectée:
lors du lavage à haute pression, la barre logeant les buses suit le profil du véhicule;
à l'arrière, lorsqu'il atteint une hauteur définie (hauteur du véhicule - différence de hauteur), les jets sont sensiblement orientés avec l'axe de propagation du jet dans une direction horizontale ou à un angle prédéterminé; De cette position, les jets frappent la zone de contre-dépouille concernée;
un basculement de quelques degrés ou une translation verticale entre deux limites des buses permet de couvrir avec certitude toute la zone de contre-dépouille.

8. Station de lavage pour exécuter la méthode selon l'une ou plusieurs des revendications précédentes, dans laquelle ladite station de lavage comprend
au moins un portail sur lequel est monté au moins un ensemble de support d'au moins une buse de distribution pour au moins un fluide de lavage à haute pression,
étant fourni un circuit hydraulique pour fournir ledit fluide à une pression prédéfinie, et
ledit portail et/ou ledit ensemble de support dudit au moins une buse étant mobiles par rapport au véhicule le long d'une trajectoire dudit ensemble de non-interférence avec la forme dudit véhicule et/ou desdits accessoires associés au même,
des moyens d'identification d'un élément saillant du profil en projection latérale et/ou frontale et/ou arrière du véhicule et de la zone de contre-dépouille respective délimitée par le même et
un station pour arrêter temporairement ledit support pour ledit au moins une buse dans une position sensiblement alignée verticalement et/ou horizontalement avec ledit élément saillant ou avec ladite zone de contre-dépouille et dans laquelle le jet délivré par les buses est orienté incident contre ladite zone de contre-dépouille;
au moins un élément de balayage du profil latéral et/ou frontal et/ou arrière du véhicule est prévu et est connecté à une unité d'analyse dudit profil obtenu à partir dudit balayage;
ladite unité analyse étant configurée pour identifier les zone dudit profil correspondant aux éléments saillants formant des contre-dépouilles dans le profil du véhicule selon une projection latérale et/ou frontale et/ou arrière dudit véhicule,
et laquelle unité d'analyse contrôle, directement ou indirectement, le positionnement du portail et/ou de l'ensemble de support de ladite au moins une buse et/ou l'orientation de ladite au moins une buse dans une position alignée verticalement avec la zone dudit élément saillant et/ou avec la zone directement sous-jacente au même, et dans laquelle le(s) jet(s) de ladite au moins une buse est/sont orienté(s) contre la zone délimitant ladite contre-dépouille, entre le côté dudit élément saillant et la bande de paroi du véhicule chevauchée par ledit élément saillant
dans laquelle ladite unité d'analyse est une unité de traitement dans laquelle un programme est chargé qui codifie les instructions pour rendre cette unité capable d'identifier lesdites zones saillantes à partir des données fournies par l'unité de balayage et pour rendre cette unité capable de générer les signaux de commande des ensembles motorisés pour déplacer le portail et/ou l'ensemble de support de la/des buse(s) et/ou de la/des buse(s) pour lesquels l'unité d'analyse contrôle directement les déplacements du portail et/ou de l'ensemble de support et/ou de la/des buse(s), ou
l'unité d'analyse est associée à une unité de pilotage qui génère les signaux de commande des ensembles motorisés pour déplacer le portail et/ou l'ensemble de support et/ou la/les buse(s), laquelle unité de pilotage reçoit des signaux pour générer lesdits signaux de commande de l'unité d'analyse, la commande s'effectuant indirectement par l'unité d'analyse,
et dans laquelle l'unité d'analyse est configurée pour déterminer la position de la zone de contre-dépouille grâce à une méthode qui prévoit d'identifier un sommet de changement de direction de la ligne définissant le profil balayé du véhicule et/ou un saut de position de ladite ligne, en combinaison avec un signal introduit par un utilisateur relatif à l'indication de la présence d'un élément saillant du profil et d'une contre-dépouille respective, ladite zone de contre-dépouille étant définie en fonction d'une valeur de distance moyenne par rapport audit sommet ou audit saut de position de ladite ligne du profil balayé.

9. Station de lavage selon la revendication 8, dans laquelle le portail a une unité de lavage à haute pression sous la forme d'une barre horizontale se déplaçant pour suivre le profil du véhicule et laquelle barre supporte des buses orientables pour générer des jets orientables et/ou laquelle barre supporte une buse orienté selon une direction prédéfinie pour générer des jets orientés.

10. Unité de lavage selon la revendication 8 ou 9, dans laquelle l'unité de balayage du profil latéral et/ou frontal et/ou arrière du véhicule peut être prévue selon l'un des modes de réalisation prévu dans la liste suivante:
a. Barrière photoélectrique à balayage de véhicule
b. Diffuse avec trois cellules photoélectriques montées sur une barre de séchage de toit et/ou sur une barre de support de buse pour fluide à haute pression ou sur un autre élément mobile verticalement
c. Capteurs à ultrasons
d. Capteurs laser
e. Capteurs radar
et/ou des combinaisons des mêmes,
chacune desdites unités de balayage étant prévue en combinaison avec une unité de mesure de la position longitudinale du portail et/ou de l'ensemble de support et/ou de la/des buse(s) le long d'une extension avant-arrière du véhicule.
